**Europäisches Patentamt**

**European Patent Office**

**Office européen des brevets**

(19)

(11) Veröffentlichungsnummer: **0 239 655**
**A1**

## (12) EUROPÄISCHE PATENTANMELDUNG

(21) Anmeldenummer: **86104381.8**

(22) Anmeldetag: **01.04.86**

(51) Int. Cl.³: **G 05 D 13/62**

(43) Veröffentlichungstag der Anmeldung:
**07.10.87 Patentblatt 87/41**

(84) Benannte Vertragsstaaten:
**AT BE CH DE FR GB IT LI NL SE**

(71) Anmelder: **Océ-Nederland B.V.**
**St. Urbanusweg 43**
**NL-5914 CC Venlo(NL)**

(72) Erfinder: **Bisseling, Wilhelmus Theodorus, Leonardus**
**Beatrixstraat 32**
**NL-5864 AM Meerlo(NL)**

(54) Elektronischer Proportional-Integral-Regler in Digitalbauweise.

㋙ Ein elektronischer Proportional-Integral-Regler (100) zur Regelung der Drehzahl eines Elektromotors (102), insbesondere zur Synchronisation der Drehzahl eines Gleichstrommotors in einem Kopiergerät mit der Drehzahl eines anderen Motors (112) in dem Kopiergerät, ist aus digitalen Bauelementen aufgebaut. Der Proportionalteil und der Integralteil des Reglers werden jeweils durch einen Aufwärts/ Abwärts-Zähler (200) gebildet, der in Abhängigkeit von den in einer logischen Schaltung aufbereiteten Impulsen des Ist-Drehzahlsignals (fm) und des Soll-Drehzahlsignals (fr) auf- oder abgezählt wird. Der Regler weist eine Schnittstelle für ein Zweidraht-Bussystem auf, über das Daten und Befehle zur Einstellung und Änderung von Regelparametern eingegeben werden können.

*Fig. 1*

# ELEKTRONISCHER PROPORTIONAL-INTEGRAL-REGLER IN DIGITAL-
BAUWEISE

Die Erfindung betrifft einen elektronischen Proportional-Integral-Regler zur Regelung der Drehzahl eines Elektromotors, insbesondere Gleichstrommotors, entsprechend der Frequenz eines Bezugssignals, mit einem Drehzahlsensor zur Erzeugung eines Drehzahlsignals, dessen Frequenz die Ausgangsdrehzahl des Motors repräsentiert, einer Proportionalschaltung, die ein dem Frequenzunterschied des Bezugssignals und des Drehzahlsignals entsprechendes P-Regelsignal erzeugt, einem Integrierer, der ein dem Zeitintegral der Differenz zwischen den Frequenzen des Bezugssignals und des Drehzahlsignals entsprechendes I-Regelsignal erzeugt, einem Addierer, der ein der Summe oder der gewichteten Summe der beiden Regelsignale entsprechendes Ausgangssignal erzeugt, und einer Ausgangsstufe zur Ansteuerung des Motors entsprechend dem Ausgangssignal des Addierers.

Ein Anwendungsbeispiel für einen derartigen Regler ist die Regelung von Antriebsaggregaten in einem Kopiergerät.

Für die Qualität der mit einem Kopiergerät hergestellten Kopien ist es wesentlich, daß die Bewegungen der verschiedenen Baugruppen des Kopiergerätes, beispielsweise des optischen Abtastsystems, des Bildaufzeichnungsmediums, des Papiertransports und dergleichen genau miteinander synchronisiert sind. Dies wird üblicherweise dadurch erreicht, daß sämtliche Baugruppen über ein Getriebe durch ein gemeinsames Antriebsaggregat angetrieben werden. Da hierfür jedoch eine aufwendige Getriebekonstruktion erforderlich ist, ist es wünschenswert, die Antriebe für die veschiedenen Baugruppen zu entkoppeln, so daß der Aufbau des Kopiergerätes vereinfacht, die Wartungsfreundlichkeit erhöht und die beim Betrieb des Kopiergerätes zu bewegenden trägen Massen verringert werden. In diesem Fall müssen die Antriebe für die einzelnen Gruppen auf elektronischem Wege synchronisiert werden. Dies kann beispielsweise dadurch erreicht werden, daß durch Abtastung der Drehzahl eines der Antriebsaggregate, etwa des Motors für das Bildaufzeichnungsmedium, ein Bezugssignal erzeugt wird, und daß die Drehzahlen der übrigen Antriebsaggregate auf dieses Bezugssignal eingeregelt werden.

Zu diesem Zweck werden Regler benötigt, die sich in einfacher Weise an die Bedingungen des jeweiligen Regelsystems (Leistung des Antriebsmotors, Trägheit der angetriebenen Bauteile und dergleichen) anpassen lassen und die eine weitgehend verzögerungsfreie Anpassung der Drehzahl des geregelten Motors an die Bezugsfrequenz innerhalb enger Toleranzen gestatten.

Regler der eingangs genannten Art können wahlweise mit Hilfe von Analogbausteinen oder mit Hilfe von digitalen Bauelementen verwirklicht werden.

Analog arbeitende Regler ermöglichen zwar eine schnelle Signalverarbeitung und somit eine kleine Verzögerungszeit de Regelsystems, haben jedoch den Nachteil, daß die Genauigkeit der Regelung begrenzt ist und daß die Anpassung an die jeweiligen Einsatzbedingungen in verhältnismäßig mühsamer Weise durch Abgleich von Widerständen und dergleichen vorgenommen werden muß.

Digitale Regelsysteme weisen demgegenüber bei verhältnismäßig geringen Kosten eine hohe Genauigkeit und geringe Störanfälligkeit auf. Üblicherweise werden bei digitalen Regelsystemen zunächst die Eingangsgrößen, d.h., die Frequenzen des Bezugssignals und des abgetasteten

- 3 -

Ist-Drehzahlsignal quantifiziert, und anschließend werden arithmetische Operationen zur Bildung der Sollwert-Istwert-Differenz, zur Erzeugung des Proportional-Anteils und des Integral-Anteils und zur Bildung des endgültigen Regelsignals ausgeführt. Da für diese Operationen eine gewisse Rechenzeit benötigt wird, ergibt sich eine verhältnismäßig lange Regelzeit.

Durch die Erfindung, die in den Patentansprüchen gekennzeichnet ist, wird ein digitaler Porportional-Integral-Regler geschaffen, der eine kurze Regelzeit und eine hohe Langzeitstabilität aufweist und der sich innerhalb einer großen Bandbreite an verschiedenartige Einsatzbedingungen anpassen läßt.

Aufgrund dieser Eigenschaften ermöglicht der erfindungsgemäße Regler die Schaffung eines Kopiergerätes mit getrennten Antrieben für die verschiedenen Teilsysteme, bei dem eine genaue Synchronisation der Teilsysteme gewährleistet ist.

Erfindungsgemäß werden die Porportionalschaltung und der Integrierer des Reglers jeweils durch einen Aufwärts/Abwärts-Zähler gebildet. Die Zähler erhalten die Aufwärts- und Abwärts-Zählimpulse jeweils von einer vorgeschalteten Logik, die das Drehzahlsignal und das Bezugssignal direkt auswertet.

Der Proportionalschaltung liegt das folgende Funktionsprinzip zugrunde. Das Drehzahlsignal und das Bezugssignal werden in normierte Signale umgewandelt, deren Impulsbreite jeweils der Periodendauer des ursprünglichen Drehzahl- bzw. Bezugssignals entspricht. Wenn während der Periode des Drehzahlsignals die Periode des Bezugssignals noch nicht eingesetzt hat oder bereits beendet ist, so wird der Zähler mit einer vorgegebenen Taktfrequenz aufgezählt. Wenn umgekehrt während der Periode des Bezugssignals die Periode des Drehzahlsignals noch nicht eingesetzt hat oder bereits beendet

- 4 -

ist, so wird der Zähler mit der gleichen Frequenz abgezählt. Nach Beendigung der letzten der beiden Perioden wird der Zählerstand zur Weiterverarbeitung ausgegeben, und der Zähler wird gelöscht, so daß ein neuer Zählzyklus beginnen kann. Auf diese Weise wird in sehr kurzen Zeitabständen, nämlich in der Größenordnung der Periode des Drehzahlsignals und des Bezugssignals, ein Ausgangssignal erzeugt, das zu der Differenz der Periodendauern proportional ist.

Der Zähler des Integrierers wird jeweils bei der ansteigenden Flanke des Drehzahlsignals aufgezählt und bei der ansteigenden Flanke des Bezugssignals abgezählt, so daß der Zählerstand jederzeit den Integralwert der Differenz zwischen der Drehzahl und der Bezugsfrequenz wiedergibt.

Die logischen Schaltungen der Proportionalschaltung und des Integrierers enthalten ggf. geeignete Schutzeinrichtungen, durch die eine Kapazitätsüberschreitung oder Kapazitätsunterschreitung (Zählerstand kleiner als 0) des Zählers sowie die gleichzeitige Zufuhr eines Aufwärts- und eines Abwärts-Zählimpulses zu dem Zähler verhindert werden.

In den Unteransprüchen sind vorteilhafte Ausgestaltungen der Erfindung angegeben. Durch diese Maßnahmen wird bei einfachem Schaltungsaufbau und unter Einhaltung einer kurzen Regelzeit eine zuverlässige und störungsfreie Signalverarbeitung gewährleistet und die Anpassungsfähigkeit des Reglers an verschiedene Einsatzbedingungen und Anforderungen erhöht. Vorzugsweise können verschiedene Sätze von aufeinander abgestimmten Einstellparametern des Regelsystems eingespeichert und mit Hilfe geeigneter Steuerbefehle entsprechend dem jeweiligen Einsatzzweck ausgewählt werden.

In einer bevorzugten Ausführungsform der Erfindung ist

- 5 -

für die Speicherung der Einstellparameter und die Übermittlung der Steuerbefehle eine Befehlseinheit vorgesehen, die mit einem Zweidraht-Bussystem kompatibel
ist. Ein solches Bussystem wird in dem US-Patent
3 889 236 und in dem europäischen Patent 0 051 332
beschrieben und ist unter dem Namen I²C-Bus bekannt.
Über das Bussystem und über die als Empfänger an das
Bussystem angeschlossene Befehlseinheit können neben
Befehlen für die Grundeinstellung, Betriebsbeginn,
Betriebsunterbrechung des Reglers und dergleichen
auch Befehle zum Umschalten des Reglers auf einen
Testbetrieb eingegeben werden, so daß die einwandfreie
Funktion des Reglers überprüft werden kann.

Der gesamte Regler ist bevorzugt als integriertes
Bauelement ausgeführt. Hierdurch wird eine kostengünstige Herstellung und eine kompakte Bauweise
sowie eine einfache Installation des Reglers ermöglicht.

Im folgenden werden bevorzugte Ausführungsbeispiele
der Erfindung anhand der Zeichnungen näher erläutert.

Figur 1          zeigt schematisch ein Regel-
                 system mit einem erfindungs-
                 gemäßen Proportional-Integral-
                 Regler;

Figur 2          ist ein Blockschaltbild des
                 Reglers;

Figur 3          ist eine Schaltskizze eines
                 Asynchron/Synchron-Wandlers;

Figur 4          ist eine Schaltskizze einer
                 Proportionalschaltung des
                 Reglers gemäß Figur 2;

Figur 5          ist ein Zeitdiagramm von Signalen
                 der Proportionalschaltung;

Figur 6          ist eine Schaltskizze eines
                 Integrierers;

Figur 7          ist ein Zeitdiagramm von Signalen
                 des Integrierers;

Figur 8          ist eine Schaltskizze eines
                 Multiplizierglieds;

Figur 9          ist eine Schaltskizze eines
                 Frequenzteilers und einer
                 Kette von Schieberegistern
                 zur Steuerung des Frequenz-
                 teilers und weiterer Bauele-
                 mente des Reglers.

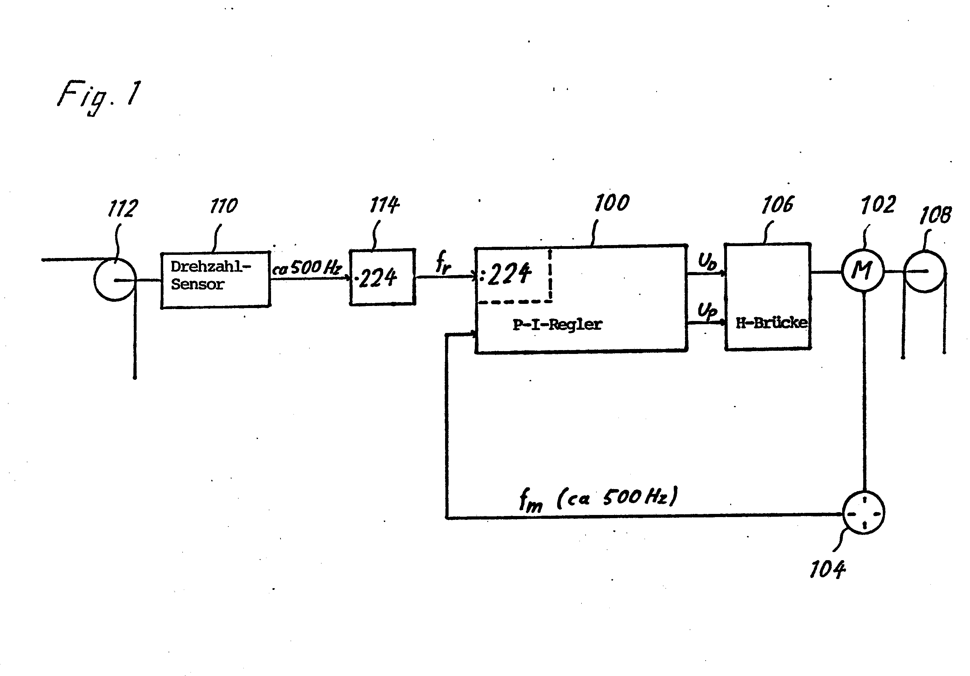

In Figur 1 ist schematisch ein Regelkreis dargestellt, der einen erfindungsgemäßen Proportional-Integral-Regler (P-I-Regler) 100 enthält.

Ein Gleichstrommotor 102 dient beispielsweise zum Antrieb eines Teilsystems, etwa einer Welle 108 in einem Kopiergerät. Ein Drehzahlsensor 104 tastet die Drehzahl des Motors 102 ab und erzeugt als Drehzahlsignal $f_m$ ein Impulssignal, dessen Frequenz proportional zu der Motordrehzahl ist. Die Ausgangsfrequenz des Drehzahlsensors 104 sollte möglichst größer als 500 Hz sein. Ein weiterer Drehzahlsensor 110 tastet die Drehzahl einer Welle 112 eines anderen Teilsystems des Kopiergerätes ab. Das Teilsystem, das die Welle 112 enthält, stellt ein Leitsystem dar, d.h., die Drehzahl des Motors 102 soll mit der Drehzahl der Welle 112 synchronisiert werden.

Die Ausgangsfrequenz des Drehzahlsensors 110, die ebenfalls etwa 500 Hz beträgt, wird in einem Frequenzvervielfacher 114 um einen bestimmten Faktor, beispielsweise um den Faktor 224 erhöht. Der Frequenzvervielfacher 114 wird beispielsweise durch zwei phasenverriegelte Schleifen (PLL=phase locked loop) gebildet, die die Frequenz nacheinander mit den Faktoren 14 und 16 vervielfachen. Das Ausgangssignal des Frequenzvervielfachers bildet ein Bezugssignal $f_r$ für die Regelung des Motors 102.

Der P-I-Regler 100 nimmt das Drehzahlsignal $f_m$ und das Bezugssignal $f_r$ auf und liefert ein binäres Signal $U_D$, das die Bewegungsrichtung des Motors vorgibt, und ein Impulssignal $U_p$ mit variabler Impulsbreite an eine Brückenschaltung 106 (H-Brücke), die den Motor 102 steuert. Die Drehzahl des Motors 102 wird mit Hilfe des Reglers 100 durch Veränderung der Nutzimpulsbreite des Impuls-

0239655

signals $U_p$ auf einen zu dem Bezugssignal $f_r$ proportionnalen Wert eingeregelt. Auf diese Weise wird die Bewegung der durch den Motor 102 angetriebenen Welle 108
mit der Bewegung der Welle 112 synchronisiert.

Die Frequenz des Bezugssignals $f_r$ wird durch einen in
den Regler 100 integrierten Frequenzteiler um einen
geeigneten Faktor (z.B. 224) verringert. Hierdurch
wird eine fein abgestufte Anpassung des "Übersetzungsverhältnisses" zwischen den Drehzahlen der Wellen 112
und 108 ermöglicht. Die Drehung des Motors 102 kann
mit einer Genauigkeit von 0,2% mit der Drehung der
Welle synchronisiert werden.

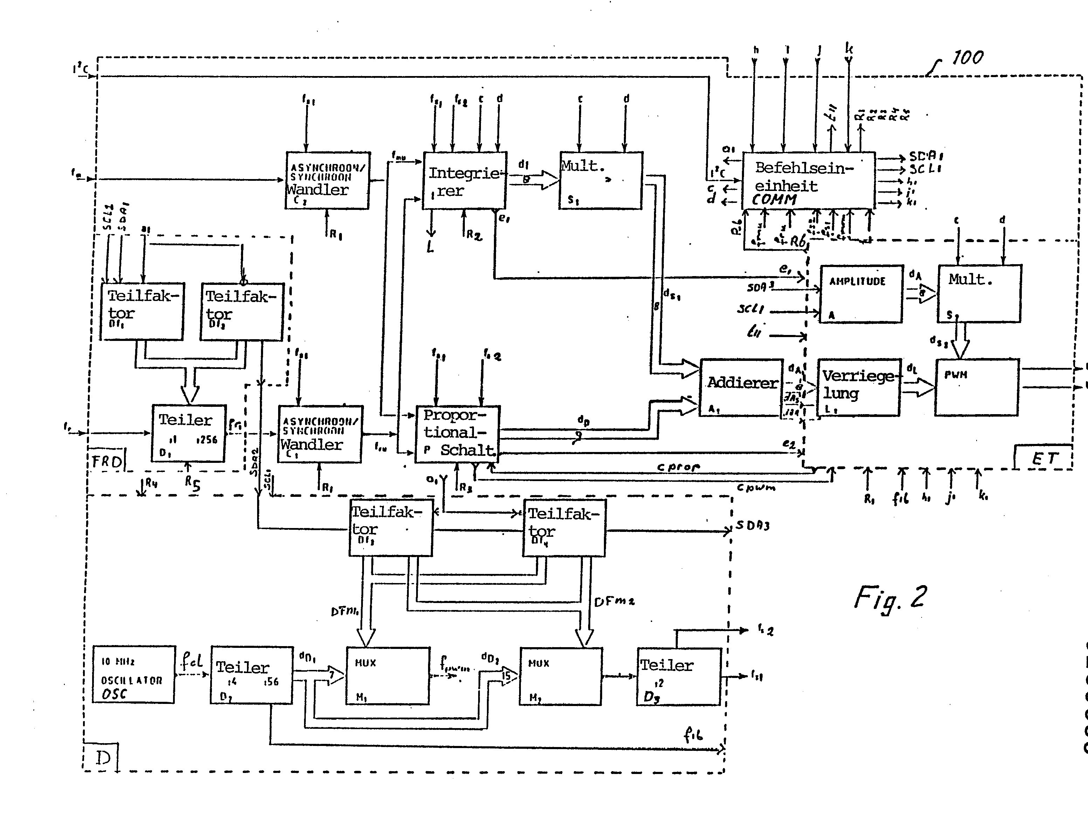

Der Regler 100 wird durch eine in Standartzelltechnik
ausgeführte integrierte Schaltung (3µ C-MOS) gebildet.
Gemäß Figur 2 umfaßt der Regler 100 eine Frequenzteiler-
Einheit FRD, durch die die Frequenz des Bezugssignals
$f_r$ entsprechend einem voreingestellten Frequenzverhältnis herabgesetzt wird, eine Regler-Einheit zur
Verarbeitung des Drehzahlsignals $F_m$ und des frequenz-
untersetzten Bezugssignals $f_{r1}$, eine Ausgangsstufe ET,
die die Ausgangssignale $U_D$ und $U_p$ liefert, einen
Taktgenerator D und eine Befehlseinheit COMM zur
Steuerung der Funktion des Reglers.

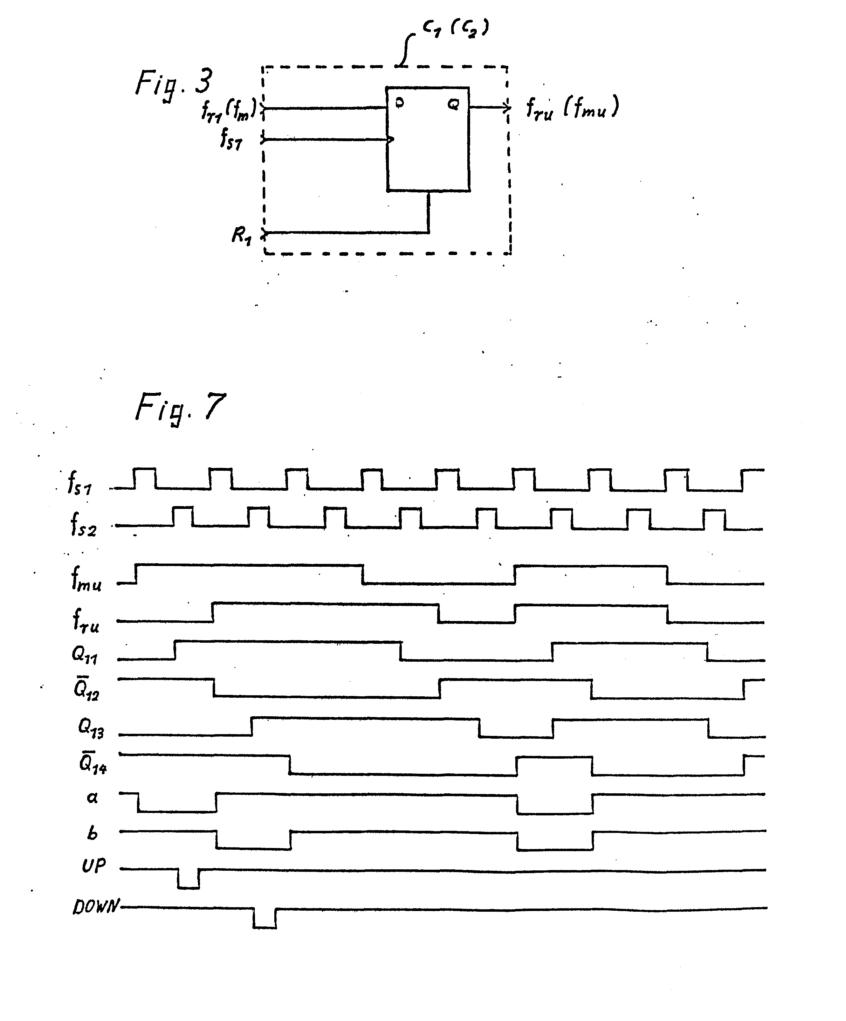

Das durch die Frequenzteiler-Einheit FRD aufbereitete Bezugssignal $f_{r1}$ gelangt an einen Asynchron/Synchron-Wandler $C_1$, der das Bezugssignal mit einem von dem Taktgenerator D ezeugten Taktsignal $f_{s1}$ synchronisiert und das synchronisierte Bezugssignal $f_{ru}$ an eine Proportionalschaltung P und einen Integrierer I übermittelt. Gemäß Figur 3 wird der Asynchron/Synchron-Wandler $C_1$ durch ein Flipflop gebildet, das durch das Signal $f_{s1}$ getaktet wird.

Ein mit dem Wandler $C_1$ baugleicher Asynchron/Synchron-Wandler $C_2$ synchronisiert das Drehzahlsignal $f_m$ mit dem Taktsignal $f_{s1}$ und liefert das synchroniserte Drehzahlsignal $f_{mu}$ an die Proportionalschaltung P und den Integrierer I.

Die Proportionalschaltung P erzeugt ein von der Differenz der Periodenlängen der Signale $f_{ru}$ und $f_{mu}$ abhängiges Proportional-Signal $d_p$ in der Form eines 8-Bit-2-Komplement-Signals, und der Integrierer I erzeugt ein von dem Frequenz-unterschied zwischen den Signalen $f_{ru}$ und $f_{mu}$ abhän-giges Integral-Signal $d_I$ in der Form eines 8-Bit-Signals. In einem Multiplizierglied (Shifter) $S_1$ wird das Inte-gral-Signal $d_I$ in Abhängigkeit von dem Zustand zweier binärer Steuersignale c,d mit dem Faktor $2^0, 2^1$ oder $2^2$ multipliziert. d.h., die Bits des Integral-Signals $d_I$ werden um 0, 1 oder 2 Stellen nach links verschoben. Das in dieser Weise multiplizierte Integral-Signal wird in einem Addierer $A_1$ mit dem Proportional-Signal $d_p$ addiert. Die 9-Bit-Leitung der Proportionalschaltung P kann dabei derart auf den Addierer geschaltet sein, daß das Proportional-Signal um ein oder zwei Binärstellen verschoben ist, was einer Multiplikation dieses Signals mit dem Faktor $2^1$ oder $2^2$ entspricht. Das von dem Addierer $A_1$ erzeugte Summensignal $d_{A1}$ wird auf

- 10 -

einen von der Proportionalschaltung P erzeugten Befehl e$_2$ von der Ausgangsstufe ET gelesen.

Die Ausgangsstufe umfaßt eine Verriegelungsschaltung (Latch) L$_1$, die das Summensignal D$_{A1}$ des Addierers verriegelt und zu gegebener Zeit an einen Impulsbreitenmodulator PWM weiterleitet. Ein Amplitudenregister A enthält ein voreingestelltes Amplitudensignal d$_A$ in der Form eines 8-Bit-Signals, das über ein Multiplizierglied S$_2$ an den Impulsbreitenmodulator PWM gelangt. Das Multiplizierglied S$_2$ entspricht in seinem Aufbau und seiner Funktion dem Multiplizierglied S$_1$.

Der Impulsbreitenmodulator PWM erzeugt das Richtungs- Signal UD und das Ausgangssignal U$_p$, dessen Impulsbreite dem von der Verriegelungsschaltung übernommenem Signal d$_L$ und dessen Periodendauer dem von dem Multiplizierglied aufbereiteten Amplitudensignal D$_{S2}$ proportional ist, während der Datenübergabe von der Verriegelungsschaltung L$_1$ an den Impulsbreitenmodulator PWM wird durch ein Signal cprop verhindert, daß die Proportionalschaltung P den Lesebefehl e$_2$ erzeugt.

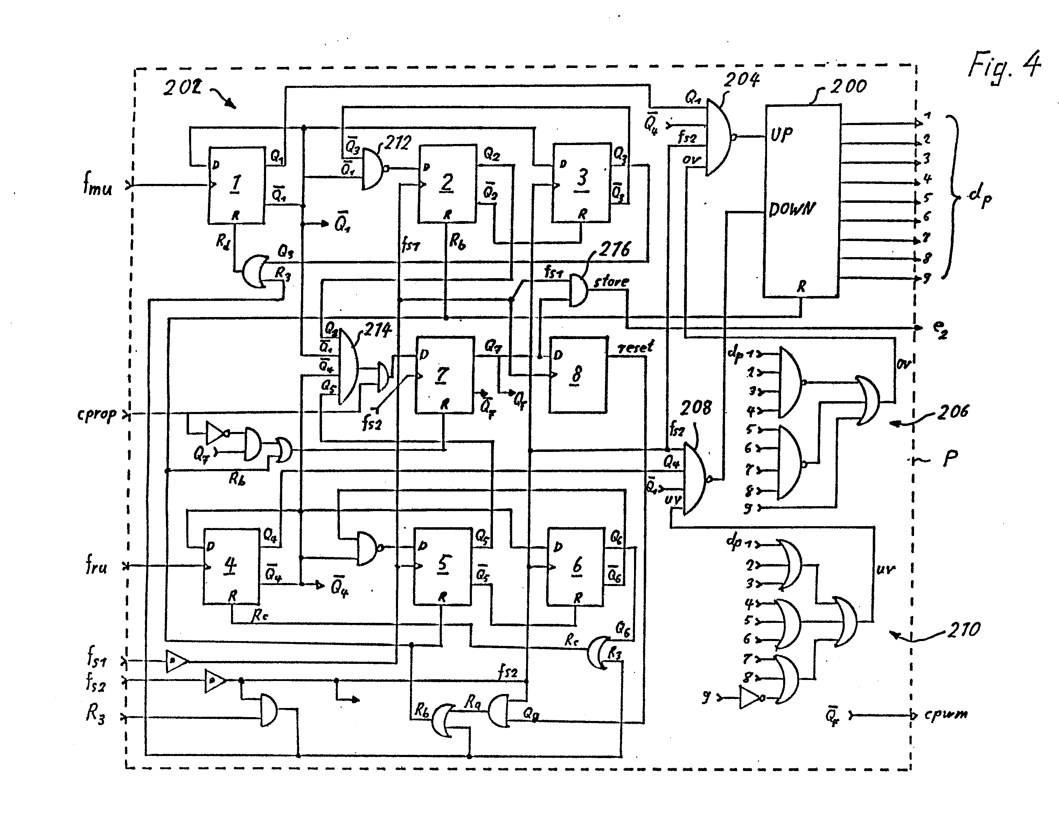

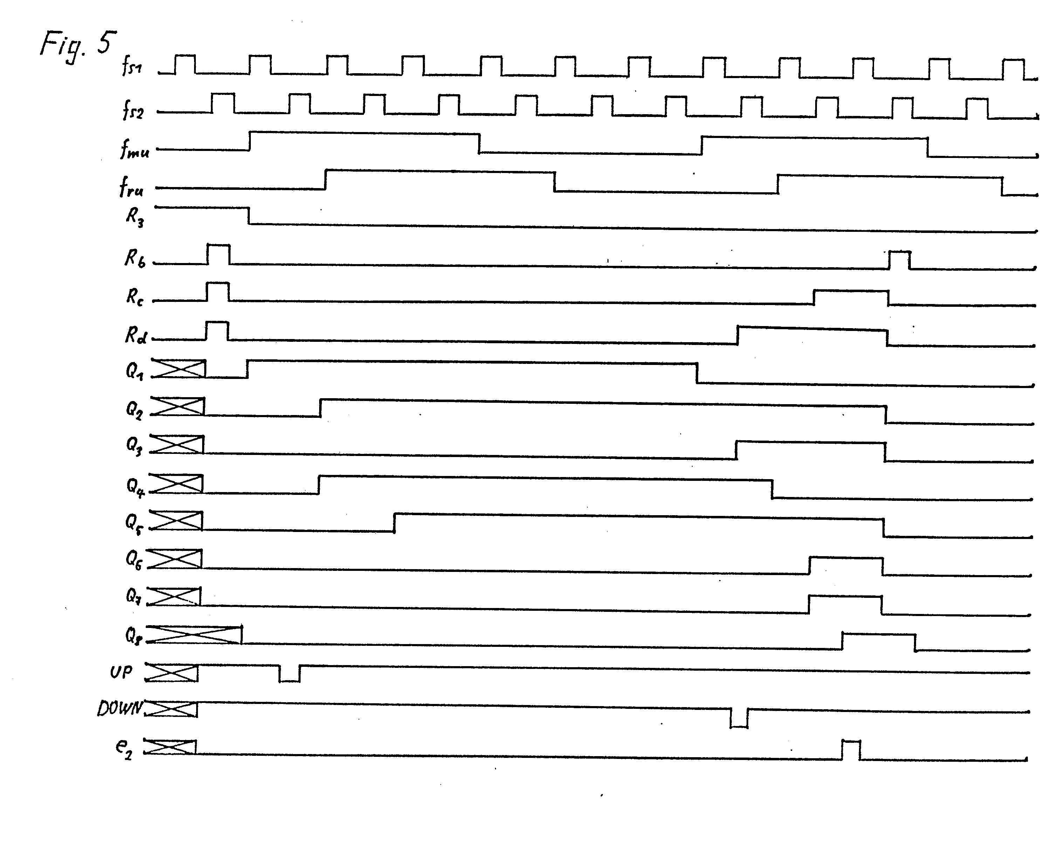

Nachfolgend soll anhand der Figuren 4 und 5 der Aufbau und die Funktion der Proportionalschaltung P erläutert werden.

Die Proportionalschaltung P umfaßt einen Aufwärts/Abwärts- Zähler 200 und eine logische Schaltung 202, die in Abhängigkeit von den synchronisierten Drehzahl- und Bezugssignalen f$_{mu}$,f$_{ru}$ die Aufwärts- und Abwärts- Zählbefehle für den Zähler 200 liefert. Die logische Schaltung 202 nimmt als Eingangssignale neben den synchronisierten Drehzahl- und Bezugssignalen das Signal cprop, ein Reset-Signal R$_3$, das Taktsignal f$_{s1}$

- 11 -

und ein weiteres Taktsignal $f_{s2}$ auf. Die beiden Taktsignale $f_{s1}$ und $f_{s2}$ weisen die gleiche Frequenz auf,
sind jedoch um eine halbe Periode phasenverschoben,
wie in Figur 5 zu erkennen ist. Die beiden Taktsignale
können beispielsweise aus einem Rechtecksignal mit
der doppelten Frequenz und dem Tastverhältnis 0,5
gewonnen werden.

Das synchroniserte Drehzahlsignal $f_{mu}$ gelangt als Taktsignal an ein Flipflop 1, dessen Eingang dem invertierenden Ausgang $\overline{Q}_1$ verbunden ist. Das Ausgangssignal
$Q_1$ des Flipflops 1 ändert somit seinen Zustand jeweils
bei der ansteigenden Flanke des Drehzahlsignals $f_{mu}$.
Die Impulsbreite des Signals $Q_1$ ist unabhängig von der
Impulsbreite des Drehzahlsignals $f_{mu}$ und stimmt mit
der Periodenlänge des Drehzahlsignals überein. Das
Signal $Q_1$ soll daher als normiertes Drehzahlsignal
bezeichnet werden. Ein Flipflop 4 nimmt als Taktsignal
das synchronisierte Bezugssignal $f_{ru}$ auf und erzeugt
in analoger Weise ein normiertes Bezugssignal $Q_4$. Der
Aufwärts-Zähleingang UP des Zählers 200 ist mit dem
Ausgang eines NAND-Gatters 204 verbunden, das als
Eingangssignal das normierte Drehzahlsignal $Q_1$, das
inviertierte normierte Bezugssignal $\overline{Q}_4$ und das Taktsignal $f_{s2}$ sowie ein Signal ov aufnimmt. Das Signal
ov hat normalerweise den Wert 1 und wird nur dann
durch eine Logik 206 auf 0 gesetzt, wenn der Zähler
200 seine obere Kapazitätsgrenze ($> + 255$) erreicht hat. Das
NAND-Gatter 204 erzeugt somit synchron mit dem
Taktsignal $f_{s2}$ einen Aufwärts-Zählimpuls (logisch 0),
wenn das normierte Drehzahlsignal $Q_1$ den Wert 1 und
das normierte Bezugssignal $\overline{Q}_4$ den Wert 1 hat.

Der Abwärts-Zähleingang DOWN des Zählers 200 ist
mit dem Ausgang eines NAND-Gatters 208 verbunden, das

die Signale $f_{s2}$, $Q_4$ und $\overline{Q}_1$ aufnimmt. Ein weiteres Eingangssignal uf wird von einer Logik 210 erzeugt und dient zum Schutz des Zählers gegen Unterschreitung der unteren Kapazitätsgrenze (< - 256). Das NAND-Gatter 208 erzeugt synchron mit dem Taktsignal $f_{s2}$ einen Abwärts-Zählimpuls, wenn das normierte Bezugssignal $Q_4$ den Wert 1 und das normierte Drehzahlsignal $Q_1$ den Wert 0 hat. Die nachfolgend beschriebenen Einzelheiten der Schaltung dienen dazu, den Zählvorgang nach Ablauf einer vollständigen Periode sowohl des Drehzahlsignals $f_{mu}$ als auch des Bezugssignals $f_{ru}$ zu beenden.

Ein Flipflop 3 nimmt als Eingangssignal das Signal $\overline{Q}_1$ auf und liefert das Ausgangssignal $Q_3$, durch das das Flipflop 1 zurückgesetzt wird. Das Flipflop 3 wird jedoch durch das Taktsignal $f_{s2}$ getaktet, während das Drehzahlsignal $f_{mu}$ mit dem Signal $f_{s1}$ synchronisiert ist. Das Rücksetzsignal $Q_3$ tritt daher erst mit einer gewissen Verzögerung nach Ablauf der vollständigen Periode des Drehzahlsignals $f_{mu}$, d.h., nach dem Abfallen des normierten Signals $Q_1$ auf (Figur 5). Ein Flipflop 2, das durch das Taktsignal $f_{s1}$ getaktet wird, nimmt über ein NAND-Gatter 212 das Eingangssignal $Q_1+Q_3$ auf (das Zeichen "+" bedeutet in dieser Beschreibung die logische Verknüpfung ODER, während das Zeichen "." die logische Verknüpfung UND bedeutet). Durch das invertierte Ausgangssignal $\overline{Q}_2$ des Flipflops 2 wird das Flipflop 3 zurückgesetzt. Das Ausgangssignal $Q_2$ des Flipflops 2 nimmt den Wert 1 an, sobald das Signal $Q_1$ den Wert 1 annimmt. Wenn das Signal $Q_1$ wieder abfällt, so behält $Q_2$ den Wert 1, da dann $Q_3 = 1$ ist. Das Flipflop 2 bleibt im gesetzen Zustand, bis es durch ein Signal $R_b$ zurückgesetzt wird. Das Signal $Q_2$ zeigt somit an, daß das Signal $Q_1$ in der Vergangenheit einmal aufgetreten ist.

- 13 -

Flipflops 5 und 6 stehen zu dem Flipflop 4 in der gleichen Beziehung wie die Flipflops 2,3 zu dem Flipflop
1. Durch das Ausgangssignal $Q_5$ des Flipflops 5 wird
angezeigt, daß das normierte Bezugssignal $Q_4$ einmal
den Wert 1 gehabt hat.

Wenn sowohl das Drehzahlsignal $f_{mu}$ als auch das Bezugssignal $f_{ru}$ eine vollständige Periode durchlaufen haben,
so haben die Signal $Q_1$ und $Q_4$ den Wert 0, während die
SignaleQ$_2$ und $Q_5$ den Wert 1 haben. Unter dieser Bedingung nimmt ein AND-Gatter 214 den Wert 1 an. Sofern
das Signal cprop ebenfalls den Wert 1 hat, wird ein
durch das Signal $f_{s2}$ getaktetes Flipflop 7 gesetzt.
Ein AND-Gatter 216 nimmt das Ausgangssignal $Q_7$ des
Flipflops 7 auf und erzeugt bei Eintreffen des nächsten
Taktsignals $f_{s1}$ den Lesebefehl $e_2$, durch den der Zählerinhalt $d_{P1}$-$d_{P9}$ des Zählers 200 nach Addition mit dem
Signal $d_{s1}$ des Multiplizierglieds $S_1$ von der Verriegelungsschaltung $L_1$ übernommen wird (Figur 2). Gleichzeitig wird durch das Ausgangssignal $Q_7$ ein durch das
Taktsignal $f_{s1}$ getaktetes Flipflop 8 gesetzt. Bei Koinzidenz des Ausgangssignals $Q_8$ des Flipflops 8 mit dem
Taktsignal $f_{s2}$ wird ein Signal $R_a$ erzeugt, das mit dem
Signal $R_3$ durch ODER verknüpft ist und als Signal $R_b$
an die Reset-Eingänge der Flipflops 2 und 5 und des
Zählers 200 gelangt. Somit kann der nächste Zählvorgang
beginnen, sobald entweder ein Impuls des Drehzahlsignals
$f_{mu}$ oder ein Impuls des Bezugssignals $f_{rz}$ eintrifft und
das entsprechende normierte Signal $Q_1$ bzw. $Q_4$ erneut
den Wert 1 annimmt.

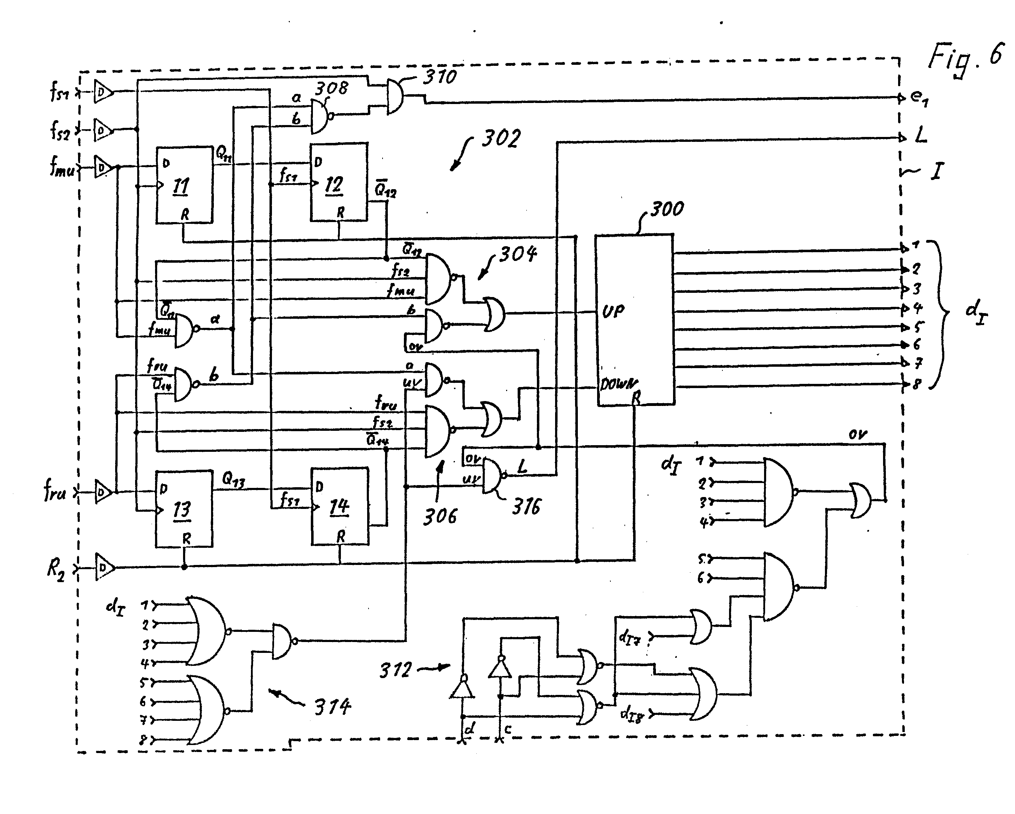

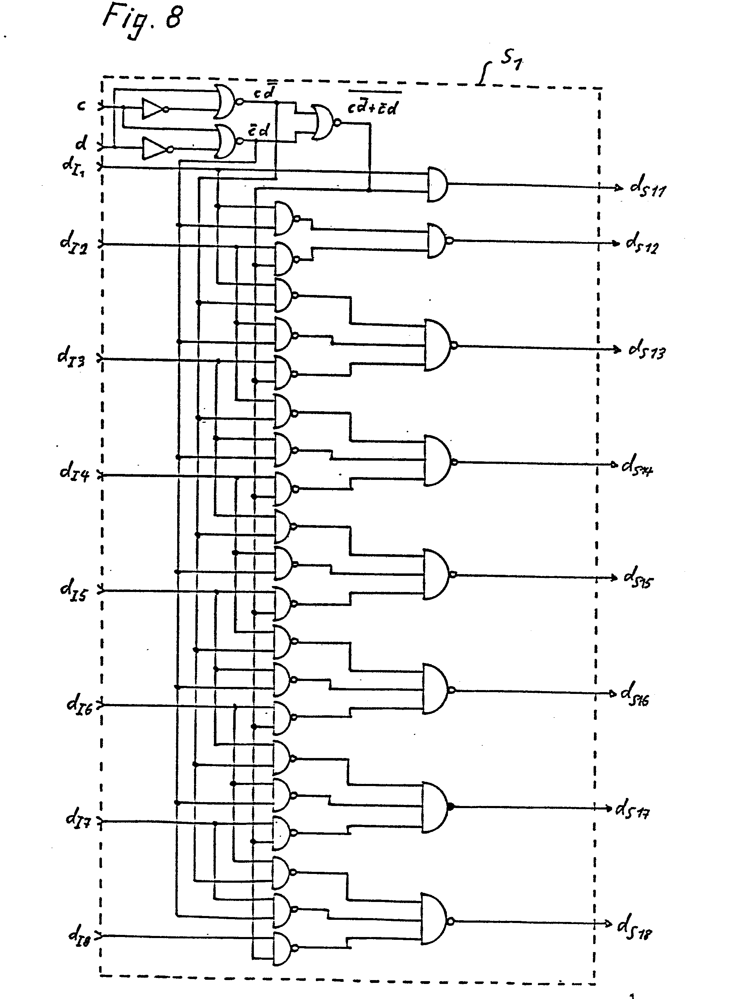

Nachfolgend sollen der Aufbau und die Arbeitsweise des
Integrierers I anhand der Figuren 6 und 7 erläutert
werden.

Der Integrierer I umfaßt einen Aufwärts/Abwärts-Zähler

- 14 -

300 mit 8 Bits und eine logische Schaltung 302 zur Erzeugung der Aufwärts- und Abwärts-Zählimpulse. Die logische Schaltung 302 nimmt als Eingangssignale die Taktsignale $f_{s1}, f_{s2}$, das synchronisierte Drehzahlsignal $f_{mu}$, das synchronisierte Bezugssignal $f_{ru}$, ein Reset-Signal $R_2$ und die Signale c und d auf, die den Multiplikationsfaktor der Multiplizierglieder $S_1, S_2$ steuern.

Durch das Taktsignal $f_{s2}$ werden Flipflops 11 und 13 getaktet, die das Drehzahlsignal $f_{mu}$ bzw. das Bezugssignal $f_{ru}$ aufnehmen. Durch das Taktsignal $f_{s1}$ werden Flipflos 12 und 14 getaktet, die das Ausgangssignal $Q_{11}$ des Flipflops 11 bzw. das Ausgangssignal $Q_{13}$ des Flipflops 13 aufnehmen.

Der Aufwärts-Zähleingang UP des Zählers 300 ist mit einer Anordnung von Logikgattern 304 verbunden, die eine NAND-Funktion ausüben. Die Eingangssignale dieser NAND-Schaltung sind das invertierte Ausgangssignal $\overline{Q}_{12}$ des Flipflops 12, das Taktsignal $f_{s2}$, das Drehzahlsignal $f_{mu}$, ein Signal b und ein Signal ov'. Auf die Bedeutung der Signale b und ov' soll später eingangen werden. Vorläufig soll angenommen werden, daß diese Signale den Wert 1 haben. Wenn das Signal $f_{mu}$ seinen Zustand von 0 auf 1 ändert, so wird beim nächsten Taktimpuls $f_{s2}$ ein Aufwärts-Zählimpuls (logisch 0) erzeugt. Bevor der nächste Taktimpuls $f_{s2}$ eintrifft, fällt das Signal $\overline{Q}_{12}$ ab, so daß weitere Zählimpulse unterdrückt werden, bis die betreffende Periode des Signals $f_{mu}$ beendet ist. Es wird also für jede Periode des Drehzahlsignals nur genau ein Zählimpuls erzeugt.

Analog wird durch eine NAND-Schaltung 306 genau ein

- 15 -

Abwärts-Zählimpuls für jede Periode des Bezugssignals $f_{ru}$ erzeugt, sofern Eingangssignale a und uf' der Schaltung 306 den Wert 1 haben.

Durch die Signale $a=\overline{\overline{f_{mu} \cdot Q_{12}}}$ und $b=\overline{\overline{f_{ru} \cdot Q_{14}}}$ wird verhindert, daß der Zähler 300 gleichzeitig einen Aufwärts- und einen Abwärts-Zählimpuls erhält. Das Signal a nimmt den Wert 0 an, wenn die Bedingungen für einen Aufwärts-Zählimpuls vorliegen, und blockiert in diesem Fall die Erzeugung eines Abwärts-Zählimpulses. Das Signal b nimmt den Wert 0 an, wenn die Bedingungen für einen Abwärts-Zählimpuls vorliegen und blockiert in diesem Fall die Erzeugung des Aufwärts-Zählimpulses.

Die Signale a und b steuern darüber hinaus die Übermittlung eines Lesebefehls $e_1$ an die Ausgangsstufe ET. Der Lesebefehl $e_1$ wird von einem AND-Gatter 310 erzeugt, das das Taktsignal $f_{s1}$ und die durch ein NAND-Gatter 308 verknüpften Signale a und b aufnimmt.

Die Signale ov' und uv' werden durch eine Logikschaltung 312 bzw. 314 erzeugt und dienen zum Schutz des Zählers 300 gegen Überschreitung der oberen bzw. unteren Kapazitätsgrenze. Das von der Logikschaltung 312 erzeugte Signal ov' ist nicht nur von den Ausgangssignalen $d_{I1}$-$d_{I8}$ des Zählers 300, sondern auch von den Signalen c und d abhängig. Wenn durch die Signale c und d der Multiplikationsfaktor in dem Multiplizierglied auf $2^1$ oder $2^2$ eingestellt wird, so wird die Kapazität des Zählers 300 künstlich um eine bzw. zwei Binärstellen verringert, damit eine Kapazitätsüberschreitung in dem Multiplizierglied $S_1$ verhindert wird. Bei einer Kapazitätsüberschreitung oder -unterschreitung des Zählers 300 liefert ein NAND-Gatter 316 ein Signal L, das als Fehlersignal an die übergeordnete Steuerung übermittelt wird.

Das Multiplizierglied $S_1$ ist im wesentlichen aus NAND-Gattern aufgebaut. Die Einzelheiten der Schaltung sind aus Figur 8 ersichtlch.

Wenn die beiden Steuersignale c und d übereinstimmend den Wert 0 oder 1 aufweisen, so wird das 8-Bit-Signal $d_I$, das den Zählerstand des Zählers 300 angibt, unverändert ($d_{S1}=d_I$). Wenn das Signal c den Wert 0 und das Signal d den Wert 1 aufeist, so wird das Integral-Signal $d_I$ mit dem Faktor $2^1$ multipliziert ($d_{S11}=0$, $d_{S12}=d_{I1}$, usw.). Wenn das Signal c den Wert 1 und das Signal d den Wert 0 aufweist, so wird das Signal $d_I$ mit dem Faktor $2^2$ multipliziert ($d_{S11}=0$, $d_{S12}=0$, $d_{S13}=d_{I1}$, usw.).

Das Multiplizierglied $S_2$ nimmt die gleichen Steuersignale c und d auf und bewirkt eine der Änderung des Integral-Signals $d_I$ entsprechende Änderung des Amplitudensignals $d_A$.

Mit Hilfe der Steuersignale c und d kann somit auf einfache Weise die Gewichtung des Proportionalanteils und des Integralanteils in dem erfindungsgemäßen Regler verstellt werden, um die Regelcharakteristik dem jeweiligen Regelsystem anzupassen.

Der Regler bietet darüber hinaus die Möglichkeit, verschiedene Geschwindigkeiten des geregelten Motors einzustellen, indem das Teilverhältnis der Frequenzteiler-Einheit FRD variiert wird, die die Frequenz des Bezugssignals $f_r$ herabsetzt.

- 17 -

Wie in Figur 2 zu erkennen ist, weist die Frequenzteiler-Einheit FRD einen Frequenzteiler $D_1$ auf, der
mit wählbaren Teilverhältnissen zwischen 1:2 und
1:255 betrieben werden kann. In zwei Schieberegistern
$D_{f1}$ und $D_{f2}$ können zwei verschiedene Teilverhältnisse
für den Frequenzteiler $D_1$ gespeichert werden. Mit Hilfe
eines binären Steuersignals $a_1$ wird zwischen den beiden
Schieberegistern $d_{f1}, d_{f2}$ umgeschaltet, so daß der Frequenzteiler $D_1$ entweder mit dem in dem Schieberegister $D_{f1}$
gespeicherten Teilverhältnis oder mit dem mit dem Schieberegister $D_{f2}$ gespeicherten Teilverhältnis arbeitet.

Der Taktgenerator D umfaßt einen Oszillator OSC, der ein
Signal $f_{cl}$ mit einer Frequenz von 10MHz an einen Frequenzteiler $D_2$ liefert. Der Frequenzteiler $D_2$ liefert eine
Anzahl paralleler Frequenzsignale, die durch Frequenzteilung mit unterschiedlichen Teilverhältnissen im Bereich von 1:4 bis 1:56 aus der Frequenz des Signals $f_{cl}$
hervorgehen. Ein Multiplexer $M_1$ nimmt sieben verschiedene Frequenzsignale des Frequenzteilers $D_2$ auf und wählt
in Abhängigkeit von einem 3-Bit-Signal $DFm_1$ eines dieser
Frequenzsignale aus. Aus ausgewählte Frequenzsignal gelangt als Taktsignal $f_{pwm}$ an die Ausgangsstufe ET. Ein
weiterer Multiplexer $M_2$ nimmt fünfzehn verschiedene
Frequenzsignale des Frequenzteilers $D_2$ auf und wählt in
Abhängigkeit von einem 4-Bit-Signal $DFm_2$ eines dieser
fünfzehn Frequenzsignale aus. Das ausgewählte Frequenzsignal gelangt an einen Frequenzteiler $D_3$. Der Frequenzteiler $D_3$ enthält ein Flipflop, das die Frequenz
des von dem Multiplexer $M_2$ gelieferten Signals halbiert.
Durch NOR-Verknüpfung des Ausgangssignals des Multiplexers $M_2$ mit dem invertierenden und dem nicht invertierenden Ausgang des Flipflops werden in dem Frequenzteiler $D_3$ die phasenversetzten Taktsignale $f_{s1}$ und $f_{s2}$
erzeugt.

Die Signale $DFm_1$ und $DFm_2$, die die Ausgangsfrequenzen der Multiplexer $M_1$ und $M_2$ festlegen, werden entweder von einem Schieberegister $Df_3$ oder von einem Schieberegister $Df_4$ geliefert. Die Auswahl der Schieberegister $Df_3$ und $Df_4$ wird durch das Signal $a_1$ gesteuert, das auch die Auswahl der Schieberegister $Df_1$ und $Df_2$ der Frequenzteiler-Einheit FRD steuert.

Auf diese Weise werden beim Umschalten des Reglers auf eine andere Geschwindigkeit automatisch auch die Taktsignale $f_{pwn}$, $f_{s1}$ und $f_{s2}$ an die neuen Bedingungen angepaßt, so daß die Abstimmung des Reglers erhalten bleibt. Insbesondere wird durch die Änderung der Taktfrequenzen $f_{s1}$ und $f_{s2}$ auch eine Anpassung des Proportionalitätsfaktors in der Proportionalschaltung P erreicht, da die Taktfrequenz $f_{s2}$ die Zählfrequenz des Zählers 200 der Proportionalschaltung bildet.

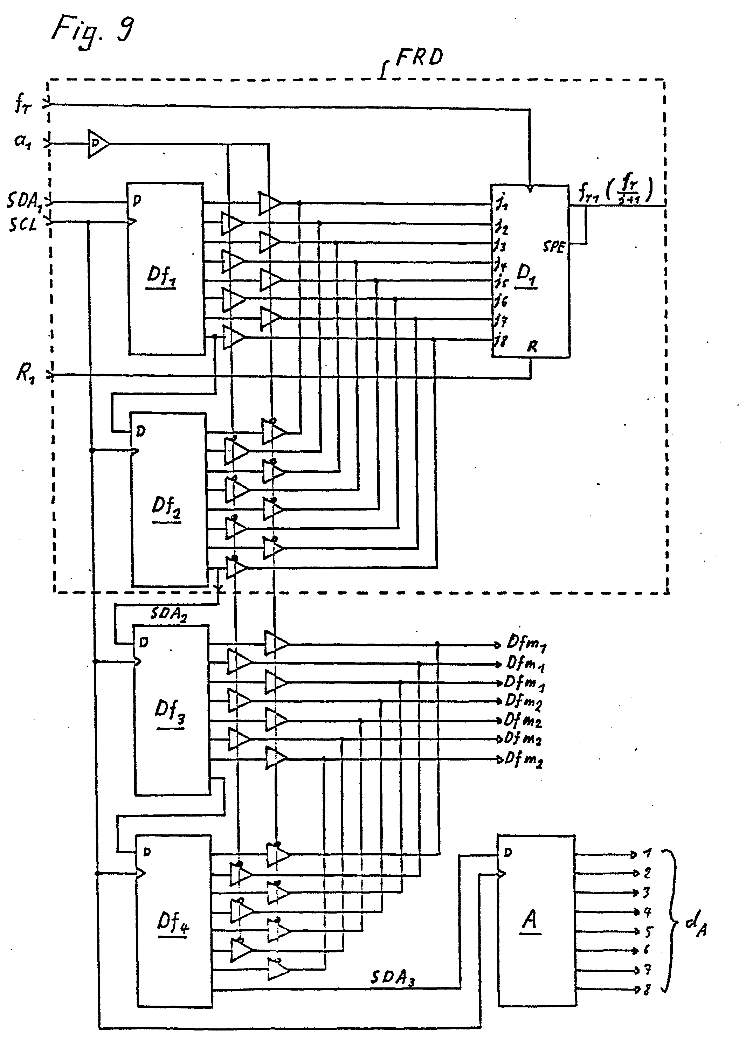

Wie in Figur 9 zu erkennen ist, sind die Schieberegister $Df_1$, $Df_2$, $Df_3$, $Df_4$ und das Amplitudenregister A in Serie geschaltet und an ein gemeinsames Taktsignal SCL angeschlossen. Bei der Initialisierung des Reglers werden die in den Registern zu speichernden Daten in Form eines seriellen Datensignals SDA zugeführt und durch die Schieberegister $Df_1$ bis $Df_4$ und A durchgeschoben. Beim Betrieg des Reglers erfolgt die Übermittlung der Inhalte der Schieberegister $Df_1$ und $Df_2$ an den Frequenzteiler $D_1$ und die Ausgabe der Signale $DFm_1$ und $DFm_2$ an die Multiplexer $M_1$ und $M_2$ über elektronische Schalter, die durch das Signal $a_1$ wechselweise aufgesteuert werden.

- 19 -

Eine vorteilhafte Abwandlung des beschriebenen Ausführungsbeispiels ist dadurch möglich, daß die Schieberegister $Df_1$-$Df_4$ und das Amplitudenregister A durch Parallelregister gebildet werden, in die die Daten über einen Bus parallel eingespeichert werden.

Das Befehlssignal $A_1$, das serielle Datensignal SDA und das Taktsignal SCL werden von der Befehlseinheit COMM erzeugt. Die Befehlseinheit erzeugt darüber hinaus die Steuersignale c,d für die Multiplizierglieder $S_1$ und $S_2$ sowie Reset-Signale $R_1$-$R_5$ zum Zurücksetzen der einzelnen Baugruppen des Reglers, und ein Signal h, das die Drehrichtung des Motors bestimmt.

Die Befehlseinheit COMM kommuniziert mit einem übergeordneten Steuersystem über einen I²C-Bus. Bei diesem Bus handelt es sich um ein Zweidraht-Datenübertragungssystem, über das ein Datensignal und ein Taktsignal übermittelt werden. Bei der Datenübermittlung sind das Datensignal und das Taktsignal jedoch derart moduliert, daß die Signale in den beiden Drähten des Busses stets entgegengesetzte Polarität aufweisen. Bei der Übermittlung von Steuersignalen, die beispielsweise den Beginn oder das Ende eines Datenübermittlung anzeigen, weisen dagegen beide Leitungen die gleiche Polarität auf. Auf diese Weise können Daten von Steuerbefehlen unterschieden werden.

Die Befehlseinheit COMM enthält eine I²C-Schnittstelle die bei der Datenübermittlung aus den modulierten Signalen der beiden Kanäle des Busses das Taktsignal und das Datensignal zurückgewinnt. Bei der Initialisierung des Reglers wird das Taktsignal an die Schieberegister $Df_1$-$Df_4$ und A weitergeleitet, und die nächsten fünf Daten-Bytes werden seriell in die Schieberegister eingelesen. Danach können über den I²C-Bus weitere Befehle, wie beispielsweise Befehle zum Ein- und Ausschalten des Reglers, zum Umschalten der Geschwindigkeit (Zustandsänderung des Signals $a_1$) und zum Umschalten des Multiplikationsfaktors der Multiplizierglieder $S_1, S_2$ (Zustandsänderung der Signale c und d) übermittelt werden. Über den I²C-Bus können ferner die an die Befehlseinheit übermittelten Befehle oder Daten quittiert und das Zustandssignal L, das den Zustand des Zählers 300 des Integrierers angibt, an die übergeordnete Steuereinheit zurückgemeldet werden.

Die Befehlseinheit weist ferner I/O-Ports h,i,j und k auf. Der Regler kann daher alternativ auch über parallele Leitungen gesteuert werden, die an die I/O-Ports h,i und j angeschlossen sind.

Die I/O-Ports dienen darüber hinaus zur Durchführung von Testoperationen. Wenn an den Port i das Signal 1 angelegt wird, so liefert die Befehlseinheit an den Ports h,k und j die Taktsignale $f_{s1}, f_{s2}$ und $f_{pwm}$. Wenn an den Port i das Signal 0 angelegt wird, so werden über die Ports h und k die synchronisierten Drehzahl- und Bezugssignale $f_{mu}$ und $f_{ru}$ zurückgemeldet.

Der Regler kann auch in einen Zustand geschaltet werden, in welchem er nur als P-Regler, oder nur als I-Regler arbeitet.

Die Erfindung ist nicht auf das oben beschriebene Ausführungsbeispiel beschränkt. Der Fachmann ist in der Lage, im Rahmen der aufgezeigten Lehre zahlreiche Abwandlungen des beschriebenen Ausführungsbeispiels vorzunehmen. Derartige Abwandlungen werden von dem

- 21 -

durch die nachfolgenden Patentansprüche angegebenen
Schutzgegenstand mit umfaßt.

## PATENTANSPRÜCHE

1. Elektronischer Proportional-Integral-Regler zur Regelung der Drehzahl eines Elektromotors, insbesondere Gleichstrommotors, entsprechend der Frequenz eines Bezugssignals $(f_r, f_{r1}, f_{ru})$, mit

- einem Drehzahlsensor (104) zur Erzeugung eines Drehsignals $(f_m, f_{mu})$, dessen Frequenz die Ausgangsdrehzahl des Motors (102) repräsentiert,

- einer Proportionalschaltung (P), die ein dem Frequenzunterschied des Bezugssignals und des Drehzahlsignals entsprechendes P-Regelsignal $(d_p)$ erzeugt,

- einem Integrierer (I), der ein dem Zeitintegral der Differenz zwischen den Frequenzen des Bezugssignals und des Drehzahlsignals entsprechendes I-Regelsignal $(d_I)$ erzeugt, einem Addierer $(A_1)$, der ein der Summe oder der gewichteten Summe der beiden Regelsignale $(d_p, d_I)$ entsprechendes Summensignal $(d_{A1})$ erzeugt, und

- einer Ausgangsstufe (ET) zur Ansteuerung des Motors entsprechend dem Summensignal $(d_{A1})$ des Addierers,

dadurch g e k e n n z e i c h n e t, daß die Proportionalschaltung (P) einen Aufwärts/Abwärts-Zähler (200) und eine logische Schaltung (202) umfaßt, die

- das Drehzahlsignal und das Bezugssignal in normierte Signale $(Q_1, Q_4)$ umwandelt, die ihren Zustand jeweils bei der ansteigenden Flanke des Drehzahlsignals bzw. des Bezugssignals ändern,

- synchron mit einem Taktsignal ($f_{s2}$) eine Folge von Aufwärts- Zählimpulsen an den Zähler (200) liefert, solange ein Impuls des normierten Drehzahlsignals ($Q_1$) und kein Impuls des normierten Bezugssignals ($Q_4$) vorliegt,

- eine Folge von taktsignalsynchronen Abwärts-Zählimpulsen an den Zähler liefert, solange ein Impuls des normierten Bezugssignals ($Q_4$) und kein Impuls des normierten Drehzahlsignals ($Q_1$) vorliegt, und

- ein Signal ($e_2$) zur Ausgabe des Zählergebnisses und ein Signal ($R_b$) zum Zurücksetzen des Zählers erzeugt, wenn sowohl in dem normierten Drehzahlsignal als auch in dem normierten Bezugssignal ein Impuls aufgetreten ist und beide Signal ($Q_1$ und $Q_4$) übereinstimmend eine Impulspause aufweisen.

2. Regler nach Anspruch 1, dadurch g e k e n n - z e i c h n e t, daß der Integrierer (I) einen Aufwärts/Abwärts-Zähler (300) und eine logische Schaltung (302) umfaßt, die jeweils bei der ansteigenden Flanke des Drehzahlsignals ($f_{mu}$) einen Aufwärts-Zählimpuls und bei der ansteigenden Flanke des Bezugssignals ($f_{ru}$) einen Abwärts-Zählimpuls an den Zähler (300) liefert.

3. Regler nach Anspruch 1 oder 2, dadurch g e k e n n - z e i c h n e t, daß der Proportionalschaltung (P) und dem Integrierer (I) zwei Asynchron/Synchron-Wandler ($C_1$, $C_2$) vorgeschaltet sind, die jeweils die ansteigende und die abfallende Flanke des Bezugssignals ($f_r$) bzw. des Drehzahlsignals ($f_m$) mit den Impulsen eines Taktsignals ($f_{s1}$) für die Proportionalschaltung und den Integrierer synchronisieren.

4. Regler nach Anspruch 3, dadurch g e k e n n - z e i c h n e t, daß der Proportionalschaltung (P) und dem Integrierer (I) ein zweites Taktsignal ($f_{s2}$) zugeführt wird, daß die gleiche Frequenz wie das erste Taktsignal ($f_{s1}$) aufweist und zu diesem um eine halbe Periode phasenverschoben ist.

5. Regler nach einem der vorhergehenden Ansprüche, dadurch g e k e n n z e i c h n e t, daß ein Frequenzteiler teiler ($D_1$) die Frequenz des Bezugssignals ($f_1$) entsprechend einem wählbaren Teilverhältnis reduziert, und daß die Proportionalschaltung und der Integrierer bzw. der Asynchron/Synchron-Wandler ($C_1$) das frequenz-untersetzte Bezugssignal ($f_{r1}$) des Frequenzteilers ($D_1$) aufnehmen.

6. Regler nach Anspruch 5, dadurch g e k e n n - z e i c h n e t, daß dem Frequenzteiler ($D_1$) ein Frequenzvervielfacher (114) vorgeschaltet ist.

7. Regler nach Anspruch 5 oder 6, dadurch g e k e n n - z e i c h n e t,

- daß dem Frequenzteiler ($D_1$) zwei Speicher ($D_{f1}$, $D_{f2}$) zur Speicherung von zwei verschiedenen Frequenz-Teilverhältnissen zugeordnet sind.

- daß ein Taktgenerator (D), der die Taktsignale ($f_{s1}$, $f_{s2}$, $f_{pwm}$) erzeugt, zwei Speicher ($D_{f3}$, $D_{f4}$) zur Speicherung von Daten ($DFm_2$) aufweist, durch die zwei verschiedene Frequenzen für die Taktsignale ($f_{s1}$, $f_{s2}$, $f_{pwm}$) vorgegeben werden, und

- daß das Teilverhältnis des Frequenzteilers ($d_1$) und die Frequenz der Taktsignale ($f_{s1}, f_{s2}, f_{pwm}$) durch ein gemeinsames Steuersignal ($a_1$) umschaltbar sind.

8. Regler nach einem der vorhergehenden Ansprüche, g e k e n n z e i c h n e t durch einen Speicher (A) für einen Amplitudenwert ($d_A$), der zusammen mit dem Summensignal ($d_{A1}$) die Größe des von der Ausgangsstufe (ET) erzeugten Ausgangssiganls ($U_p$) festlegt.

9. Regler nach Anspruch 8, dadurch g e k e n n z e i c h n e t, daß die Ausgangsstufe (ET) einen Impulsbreitenmodulator (PWM) aufweist, der als Ausgangssignal ($U_p$) ein Signal mit einer dem Summensignal ($d_{a1}$) entsprechenden Impulsbreite und einer dem Amplitudenwert ($d_a$) entsprechenden Periodenlänge erzeugt.

10. Regler nach einem der vorhergehenden Ansprüche, dadurch g e k e n n z e i c h n e t, daß dem Integrierer (I) und dem Amplitudenwrt-Speicher (A) je ein Multiplizierglied ($S_1, S_2$) nachgeschaltet ist und daß die Multiplizierglieder die Mehrbit-Daten ($d_1$ und $d_A$) des Integrieers und des Speichers in Abhängigkeit von Steuersignalen (c,d) mit der gleichen Zweierpotenz multiplizieren.

11. Regler nach einem der vorhergehenden Ansprüche, dadurch g e k e n n z e i c h n e t, daß eine Befehlseinheit (COMM) des Reglers, die die Daten und Steuersignale ($SDA; a_1, c, d$) an die einzelnen Baugruppen des Reglers übermittelt, eine Schnittstelle für ein Zweidraht-Bussystem ($I^2C$) aufweist.

- 26 -

0239655

12. Kopiergerät mit mehreren synchron zueinander beweglichen Teilsystemen, dadurch g e k e n n z e i c h n e t, daß die einzelnen Teilsysteme gesonderte Antriebe aufweisen, die durch Regler gemäß einem der Ansprüche 1 bis 11 miteinander synchronisiert werden.

# Fig. 1

Fig. 2

Fig. 3

Fig. 7

Fig. 4

Fig. 5

Fig. 6

Fig. 8

Fig. 9

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | ELEKTRO-TECHNISCHE-ZEITSCHRIFT B, Band 24, Heft 13, 1972, Seiten 328-330, Hamburg; M. KLINCK "Ein digitaler Einzelregler für frequenzanaloge Messwerte" * Seite 329, linke Spalte, Zeile 18 - Seite 330, rechte Spalte, Zeile 7, Figuren 1-3 * | 1 | G 05 D 13/62 |
| A | idem | 9 | |
| Y | US-A-3 832 609 (W.J. BARRETT et al.) * Spalte 5, Zeile 42 - Spalte 7, Zeile 17; Figur 1 * | 1 | |
| A | DE-A-2 643 441 (SIEMENS AG) * Seite 7, Zeile 25 - Seite 11, Zeile 35; Figuren 1, 3 * | 1,9 | RECHERCHIERTE SACHGEBIETE (Int. Cl.4) |
| A | US-A-4 112 479 (R.I. WHITE) * Spalte 2, Zeile 20 - Spalte 3, Zeile 22; Figur 1 * | 1 | G 05 D 13/00 G 05 B 11/00 H 03 K 5/00 H 02 P 5/00 |

Der vorliegende Recherchenbericht wurde für alle Patentansprüche erstellt.

| Recherchenort | Abschlußdatum der Recherche | Prüfer |
|---|---|---|
| BERLIN | 17-10-1988 | WEIHS J.A. |